# EUROPEAN PATENT SPECIFICATION

(11) **EP 1 852 585 B1**
(45) Date of publication and mention of the grant of the patent: **11.04.2012**
(21) Application number: 06714275.2
(22) Date of filing: 22.02.2006
(51) Int. Cl.: F01N 13/08

(54) **EXHAUST HEAT RECOVERY DEVICE**
ABGASWÄRMERÜCKGEWINNUNGSVORRICHTUNG
DISPOSITIF DE RECUPERATION DE CHALEUR DE GAZ D'ECHAPPEMENT

(30) Priority: 23.02.2005 JP 2005087052
(43) Date of publication of application: 07.11.2007
(73) Proprietor: Sango Co., Ltd., Nishikamo-gun, Aichi 470-0294 (JP)
(72) Inventor: HASE, Shuichi c/o Yawatayama Kojo, SANGO CO., LTD., Nishikamo-gun, Aichi, 4700224 (JP)
(74) Representative: TBK
(86) International application number: PCT/JP2006/303135
(87) International publication number: WO 2006/090725

(56) References cited:
- EP-A1- 1 426 602
- EP-A2- 0 885 758
- WO-A1-2004/046516
- JP-A- 04 353 256
- JP-A- 2004 211 660
- JP-U- 63 198 411

## Description

### Technical Field

The present invention relates to an exhaust heat recovery device provided in an exhaust system of a vehicle equipped with an internal combustion engine and recovering exhaust heat to use it for warm-up etc.

### Background Art

There has been known such an exhaust heat recovery device which opens and closes a valve body of an exhaust system according to the driving state of an internal combustion engine and the temperature of a medium (cooling water) and can perform switching control of the passage of exhaust gas between a heat exchanger in the exhaust system and a bypass route through which the exhaust gas bypasses the heat exchanger. By controlling in this manner, an exhaust heat recovery device described in Patent Document 1, for example, is intended to eliminate the defect of the driving performance in the cold state of a vehicle.
Patent Document 1: JP-U-63-160315

EP 1 426 602 A1 discloses an exhaust-heat recovery system which comprises a catalytic converter, an exhaust heat exchanger, an air conditioner and an engine controller. The catalytic converter is such that exhaust discharged from an engine is passed therethrough and combustible components in the exhaust are burned through catalysis therein. The exhaust heat exchanger induces heat exchange between the exhaust having passed through the catalytic converter and a coolant having passed through the engine. The air conditioner generates a heating wind by means of the heat exchange between the coolant having passed through the exhaust heat exchanger and an air conditioning wind. The engine controller controls incrementally the combustible components in the exhaust to be burned in the catalytic converter when the prescribed condition for heating is not satisfied.

EP 0 885 758 A2 discloses a heat flow operation being divided into two phases, whereby in the first phase a higher counter pressure than in the second phase is produced. A first valve is arranged in the main conduit between the by-pass conduit connections and a second valve in the by-pass conduit downstream from the heat exchanger. In the first phase both valve are closed and in the second phase the first valve is closed, but the second valve is opened. A third phase is defined as normal phase, in which preferably the first valve is opened but the second valve is closed. The valves are controlled displaceably timewise, when the positions of both valves have to be altered on transition from one phase to the other.

### Disclosure of the invention

### Problems to be solved by the invention

The exhaust heat recovery device described in the above-mentioned Patent Document 1 requires driving means such as a motor and a power driving actuator for driving a valve body used for switching control in the valve, control means such as a computer for controlling the same, and detecting means for detecting the rotational speed of the internal combustion engine and the temperature of the medium. Wiring and piping are required for connecting them and a dedicated design is required for each vehicle. This cannot be an advantageous method in cost.

### Means for Solving the Problems

To solve the above problems, the invention according to claim 1 is an exhaust heat recovery device provided in an exhaust system of an internal combustion engine and comprising a heat exchanger for performing heat exchange between exhaust gas and a medium, a bypass route through which the exhaust gas bypasses the heat exchanger, and a valve body for opening and closing the bypass route, wherein the exhaust heat recovery device comprises the valve body that operates to open the bypass route from a closed state against urging force of an urging member when the flow rate of the exhaust gas is equal to or higher than a predetermined value, and a temperature-activated actuator that causes the valve body to open when the temperature of the medium is equal to or higher than a predetermined value, whereby the valve body operates to open when at least one of the flow rate of the exhaust gas and the temperature of the medium is equal to or higher than the corresponding predetermined value.

The invention according to claim 2, in the invention according to claim 1, is an exhaust heat recovery device further including a crank mechanism that causes the valve body to open by an expanding movement of the temperature-activated actuator which expands and contracts according to the temperature of the medium, and a floating mechanism that couples the contracting movement of the temperature-activated actuator and the closing movement of the valve body in a floating state.

The invention according to claim 3, in the invention according to claim 1 or 2, is an exhaust heat recovery device wherein the temperature-activated actuator is a thermoelement which expands and contracts by an incorporated wax.

### Effect of the Invention

According to the present invention, when the flow rate of the exhaust gas is increased to be equal to or higher than the predetermined value, the valve body is opened so as to open the bypass route regardless of the temperature of the medium and the exhaust gas thus flows through the bypass route, bypassing the heat exchanger on the exhaust system, and accordingly, the flow resistance of the exhaust gas in the exhaust system can be reduced. It is therefore possible to eliminate the disadvantage of the driving performance when the vehicle is started in the insufficient warmed state. Further, also in the state where the flow rate of the exhaust gas is low and the bypass route is closed by the valve body, if the temperature of the medium is equal to or higher than the predetermined value, the temperature-activated actuator causes the valve body to open so as to open the bypass route, and the exhaust gas then bypasses the heat exchanger so as to flow through the bypass route, and accordingly, it is possible to suppress overheat of the medium flowing through the heat exchanger. Therefore, the overload on a cooling system of a vehicle concerned in a traffic jam can be prevented.

Also, the control of this exhaust heat recovery device is completed in the exhaust heat recovery device, and none of wiring, piping, detecting means, control means and power supply are required, thus, the present invention is excellent in mounting ability, economy effect, and reliability.

### Best Mode for Carrying out the Invention

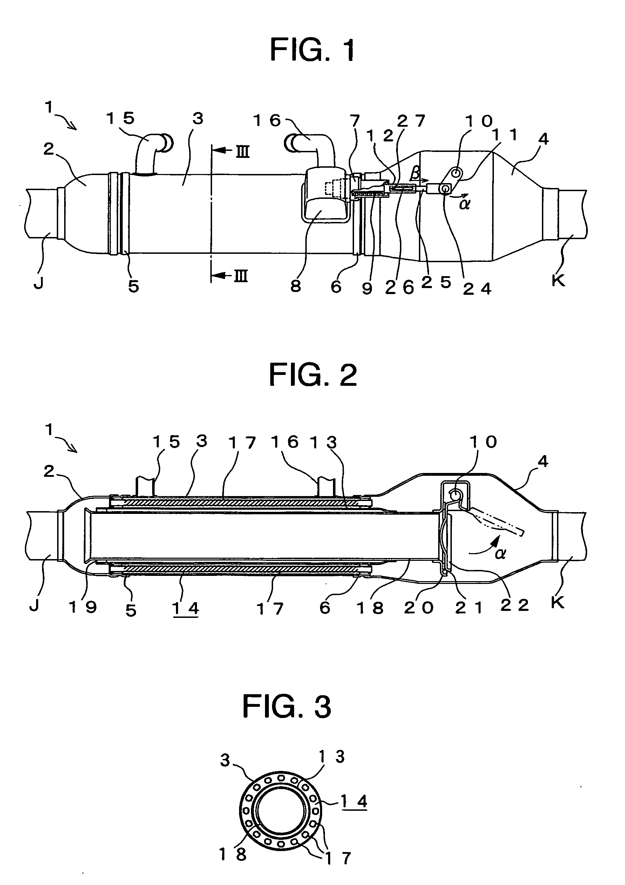

Best mode for carrying out the present invention will be described on the basis of embodiments shown in Figs. 1 to 8C.

### Embodiment 1

Figs. 1 to 3 show Embodiment 1 according to the present invention, in which Fig. 1 is a front view showing an exhaust heat recovery device 1 of Embodiment 1, Fig. 2 is a vertical section view of the exhaust heat recovery device 1 in Fig. 1, and Fig. 3 is a cross-sectional view taken along line III - III in Fig. 1.

The exhaust heat recovery device 1 is disposed in an exhaust system of a vehicle, etc., having an internal combustion engine; an upstream side exhaust pipe J is connected to the upstream side of the device 1 (on a left side in the drawing) and a downstream side exhaust pipe K is connected to the downstream side of the device 1 (on a right side in the drawing), as shown in Fig. 1. A funnel-shaped cone 2 and one end of a first case 3 having a cylindrical shape, and the other end of the first case 3 and a second case 4 having a tubular shape are joined to each other so as to sandwich retainers 5 and 6 therebetween, respectively.

A cover pipe 13 is provided inside the first case 3 substantially coaxially with the first case 3 and through both the retainers 5 and 6 in a liquid-tight manner, as shown in Figs. 2 and 3, and the first case 3, the cover pipe 13, and both the retainers 5 and 6 form a medium flow part 14. A medium inlet 16 and a medium outlet 15 which are connected to a cooling system of the internal combustion engine are provided in the first case 3 so that a medium flows through the medium flow part 14. Heat exchange pipes 17 having helical grooves formed therein are arranged in the medium flow part 14, extending through both the retainers 5 and 6, a plurality of the heat exchange pipes 17 are disposed so as to surround the outer circumference of the cover pipe 13, as shown in Fig. 3, and the heat exchange is performed between the medium flowing through the medium flow part 14 and the exhaust gas when exhaust gas flows through the heat exchange pipes 17. In Embodiment 1, the first case 3, the retainers 5 and 6, the cover pipe 13, the medium flow part 14, the medium inlet 16, the medium outlet 15, and the heat exchange pipes 17 constitute a heat exchanger.

Outside the first case 3, there are provided a thermoelement 7 as a temperature-activated actuator, and an element cover 8 covering the same. The element cover 8 is constructed such that the medium flowing through the medium flow part 14 can flow in the inside of the element cover 8 so that the thermoelement 7 and the medium can contact with each other. The thermoelement 7 causes an activating arm 12 to perform a translatory expanding motion in the P direction, according to the heat expansion of the incorporated paraffin wax corresponding to a temperature rise of the flowing medium, and allows the activating arm 12 to perform a translatory contracting motion in the opposite direction to the above-mentioned direction by a return spring 9 disposed in the thermoelement 7 when the temperature of the medium is lowered and the paraffin wax contracts. The activating arm 12 has at its end an axially extending slot 26 and a rod 25 having a pin 27 engaging with the slot 26 can slide axially within the range of the slot 26, so as to form a floating mechanism.

A bypass pipe 18 forming a bypass route is disposed inside the cover pipe 13 substantially coaxially with the cover pipe 13. The bypass pipe 18 is formed by a cylindrical pipe having upstream and downstream open ends, joined to the downstream end of the cover pipe 13, and held onto the upstream end of the cover pipe 13 via a sliding member 19. This can absorb a heat expansion difference between the cover pipe 13 and the bypass pipe 18 caused when the exhaust gas flows through the bypass pipe 18, thereby improving durability.

As shown in Fig. 2, a valve seat 20 and a cushioning member 21 suppressing any hitting noise are provided at the downstream end of the bypass pipe 18. A butterfly valve body 22 which contacts with the valve seat 20 and can open and close the bypass pipe 18 is rotatably provided on a valve shaft 10 disposed at a periphery near the end of the bypass pipe 18, and is urged in the closing direction of the bypass pipe 18 by an urging spring, not shown. When the flow rate of the exhaust gas flowing through the bypass pipe 18 is equal to or lower than a predetermined value, the valve body 22 closes the downstream end of the bypass pipe 18 by the urging force of the urging spring. The valve system opening and closing according to the flow rate of the exhaust gas is known in the exhaust devices as a variable valve.

One end of the valve shaft 10 protrudes outside the second case 4, one end of a crank 11 is integrally journaled to the protruding end of the valve shaft 10, and the rod 25 of the above-described floating mechanism is journaled to the other end of the crank 11 via a pivot 24. The valve body 22 is rotated via the crank mechanism by the expansion and contraction of the thermoelement 7.

The operation of the thus-constituted exhaust heat recovery device 1 of Embodiment 1 will be described.
When the flow rate of the exhaust gas and the temperature of the medium are equal to or lower than the respectively predetermined values, the valve body 22 closes the bypass pipe 18 by the urging force of the urging spring, not shown. The exhaust gas forcibly flows through in the heat exchange pipes 17 to be heat-exchanged between the exhaust gas and the medium flowing through the medium flow part 14.

When the flow rate of the exhaust gas is equal to or higher than the predetermined value, even if the temperature of the medium is equal to or lower than the predetermined value, the exhaust gas rotates the valve body 22 in the α direction shown in Fig. 2. The rod 25 is moved in the β direction shown in Fig. 1, accompanying the rotation of the crank 11 provided integrally with the valve body 22, but the valve body 22 can be rotated without being affected by the thermoelement 7 to open the bypass pipe 18 since the rod 25 is coupled to the activating arm 12 in the floating manner.

When the temperature of the medium is equal to or higher than the predetermined value, even if the flow rate of the exhaust gas is equal to or lower than the predetermined value, the thermoelement 7 expands to move the activating arm 12 in the β direction and the left end of the slot 26 in the drawing is engaged with the pin 27 to move the rod 25 in the β direction. Along with it, the rotation of the crank 11 about the valve shaft 10 causes the valve body 22 integral therewith to rotate in the α direction and in the opening direction to open the bypass pipe 18.

In Embodiment 1, when the flow rate of the exhaust gas is increased to be equal to or higher than the predetermined value, the bypass pipe 18 is opened regardless of the temperature of the medium and the exhaust gas then bypasses the heat exchange pipes 17 to flow through the bypass pipe 18. Thus, the flow resistance of the exhaust gas can be reduced, and accordingly, it is possible to eliminate the disadvantage of the driving performance when a vehicle is started in the state that warm-up is insufficient. On the other hand, even in the state that the flow rate of the exhaust gas is low and the bypass pipe 18 is closed by the valve body 22, when the temperature of the medium is equal to or higher than the predetermined value, the thermoelement 7 as the temperature-activated actuator causes the valve body 22 to open, and the exhaust gas bypasses the heat exchange pipes 17 to flow through the bypass pipe 18, whereby the overheat of the medium can be prevented. Therefore, concerns of the overload on a cooling system of a vehicle equipped with an internal combustion engine in a traffic jam can be prevented.

### Embodiment 2

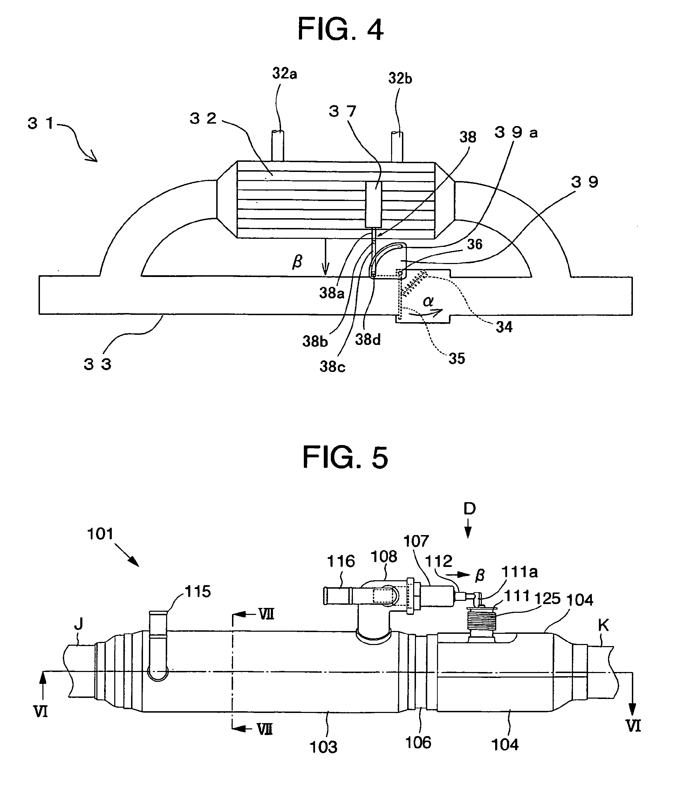

Fig. 4 is a schematic view showing an exhaust heat recovery device 31 of Embodiment 2 according to the present invention.

The heat recovery device 31 is disposed in an exhaust system of a vehicle, etc., having an internal combustion engine; an upstream side exhaust pipe (not shown) is connected to the upstream side of the device (left side in the drawing) and a downstream side exhaust pipe (not shown) is connected to the downstream side of the device (right side in the drawing). A heat exchanger 32 is connected to a cooling system of the internal combustion engine, not shown, by a medium outlet 32a and a medium inlet 32b and constructed such that it can perform heat exchange between the exhaust gas and a medium flowing through the heat exchanger 32. A bypass route 33 is provided to lead the exhaust gas to the downstream side exhaust pipe by bypassing the heat exchanger 32. On the way of the bypass route 33, a butterfly valve body 35 is provided on a valve shaft 36, being urged in the direction closing the bypass route 33 by an urging member 34 constituted by a spring, and the valve body 35 can rotate conjointly with the valve shaft 36 around the valve shaft 36. When the flow rate of the exhaust gas is equal to or higher than the predetermined value, the valve body 35 is rotated against the urging force of the urging member 34 to open the bypass route 33.

A thermoelement 37 as the temperature-activated actuator is provided outside the heat exchanger 32 in such a manner that its heat receiving portion is brought into contact with the medium flowing through the heat exchanger 32. The thermoelement 37 causes a first arm 38a constituting an activating arm 38 to perform a translatory expanding motion in the β direction in Fig. 4, according to the heat expansion of the incorporated paraffin wax corresponding to temperature rise of the medium, and allows the first arm 38a of the activating arm 38 to perform a translatory contracting motion in the opposite direction to the above-mentioned direction by an incorporated return spring (not shown) when the paraffin wax is contracted. The free end of the first arm 38a is rotatably coupled to a second arm 38c by a rotational shaft 38b. In addition, a crank 39 operatively coupling the activating arm 38 with the valve body 35 is provided for conjoint rotation with the valve shaft 36. In addition, as shown in Fig. 4, the crank 39 is formed in a substantially triangular shape around the valve shaft 36 and is provided with an arc slot 39a around the valve shaft 36. A pin 38d provided at the free end of the second arm 38c of the activating arm 38 is loosely fitted in the arc slot 39a to be slidable within the range of the arc slot 39a for forming the floating mechanism.

The operation of the thus-constituted exhaust heat recovery device 31 of Embodiment 2 will be described.
When the flow rate of the exhaust gas and the temperature of the medium are both equal to or lower than the respectively predetermined values, the valve body 35 closes the bypass pipe 33 by the urging force of the urging member 34. The exhaust gas forcefully flows through the heat exchanger 32 to be heat-exchanged between the exhaust gas and the medium.

When the flow rate of the exhaust gas is equal to or higher than the predetermined value, even if the temperature of the medium is equal to or lower than the predetermined value, the exhaust gas rotates the valve body 35 in the α direction shown in Fig. 4. The crank 39 is rotated in the counterclockwise direction in Fig. 4 with the rotation of the valve body 35. The pin 38d of the activating arm 38 is slid in the slot 39a. The valve body 35 is rotated without being affected by the thermoelement 37 to open the bypass pipe 33.

Even if the flow rate of the exhaust gas is equal to or lower than the predetermined value, when the temperature of the medium is equal to or higher than the predetermined value, the thermoelement 37 expands to move the first arm 38a of the activating arm 38 in the β direction. The pin 38d at the free end of the second arm 38c presses the lower end of the slot 39a in the drawing downwardly to rotate the crank 39 in the counterclockwise direction. At the rotation, the second arm 38c is rotated around the rotational shaft 38b to the right side in the drawing and rotates the crank 39 without any trouble. The valve body 35 is rotated in the opening direction by the rotation of the crank 39 in the counterclockwise direction to open the bypass pipe 33.

Embodiment 2 can exhibit the same effect as Embodiment 1.

### Embodiment 3

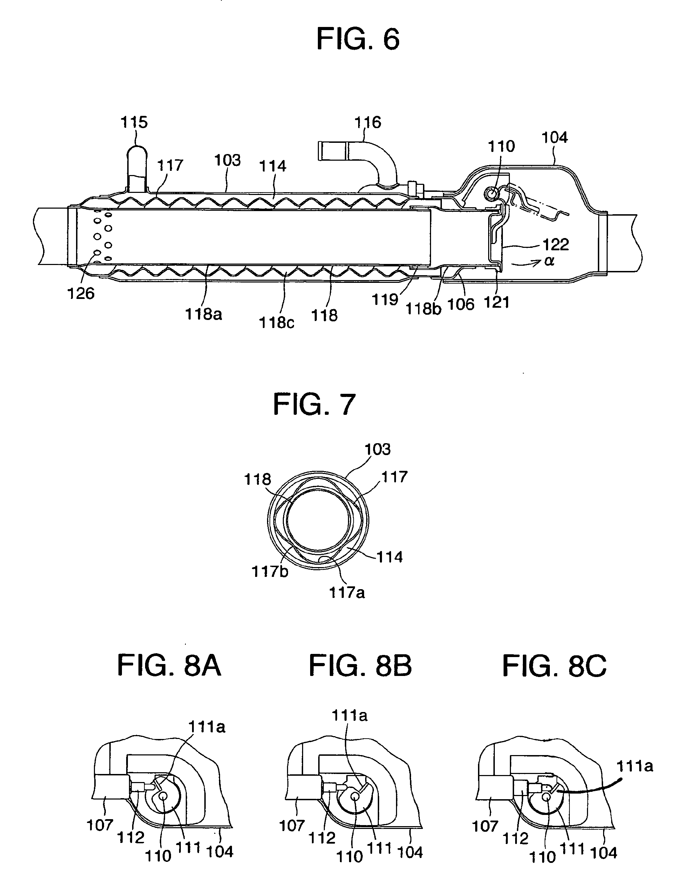

Figs. 5 to 8 show Embodiment 3 according to the present invention, in which Fig. 5 is a front view showing an exhaust heat recovery device 101 of Embodiment 3, Fig. 6 is a vertical section view showing the exhaust heat recovery device 101 of Embodiment 3, taken along line VI - VI in Fig. 5, Fig. 7 is a cross-sectional view taken along line VII - VII in Fig. 5, and Figs. 8A to 8C are partially enlarged views showing operational states as seen in the D direction in Fig. 5.

The exhaust heat recovery device 101 is disposed in an exhaust system of a vehicle, etc., having an internal combustion engine. As shown in Fig. 5, an upstream side exhaust pipe J is connected to the upstream side of the device (the left side in the drawing) and a downstream side exhaust pipe K is connected to the downstream side (the right side in the drawing) of the device.

A first case 103 having a cylindrical shape is arranged on the upstream side of the exhaust heat recovery device 101. As shown in Fig. 6, a heat exchange pipe 117 is provided inside the first case 103 substantially coaxially with the first case 103 and in a liquid-tight manner at both ends of the first case 103, and a medium flow part 114 is formed between the heat exchange pipe 117 and the first case 103. As shown in Fig. 7, the cross section of the heat exchange pipe 117 of this embodiment in the direction orthogonal to its axial direction is formed in a wavy shape alternately forming four mountain portions 117a and four valley portions 117b in the circumference direction. The four valley portions (groove portions) 117b are helically formed in the axial direction.

A medium outlet 115 connected to a cooling system of the internal combustion engine is provided in the first case 103. A medium inlet 116 is provided in a later-described element cover 108 disposed outside the first case 103. A medium flows through the medium flow part 114 and in the element cover 108. In Embodiment 3, the first case 103, the medium flow part 114, the medium outlet 115, the medium inlet 116, the heat exchange pipe 117, and a space 118c constitute a heat exchanger.

On the downstream side of the heat exchange pipe 117, a second case 104 including two portions divided in the circumference direction is joined to the heat exchange pipe 117 so as to sandwich therebetween a retainer 106 having an opening, not shown.

A bypass pipe 118 forming a bypass route therein is formed by two pipes including an upstream side bypass pipe 118a and a downstream side bypass pipe 118b connected by fitting one in another via a sliding member 119, the upstream end and the downstream end of the bypass pipe 118 are opened, and the bypass pipe 118 is retained inside the heat exchange pipe 117 substantially coaxially with the first case 103 by the upstream side end of the heat exchange pipe 117 and the retainer 106 provided on the downstream side of the heat exchange pipe 117.

Near the upstream end of the bypass pipe 118, a plurality of small-diameter communication holes 126 are formed to be communicated with the space 118c formed between the bypass pipe 118 and the heat exchange pipe 117. Exhaust gas in the bypass pipe 118 can flow into the space 118c through the communication holes 126. Upon the flow of the exhaust gas, heat exchange is performed between the medium flowing through the medium flow part 114 and the exhaust gas.

In the downstream portion of the bypass pipe 118, a butterfly valve body 122 opening and closing the bypass pipe 118 is provided integrally with a valve shaft 110 pivotally mounted to the bypass pipe 118, and is urged in the closing direction by an urging spring 125 urging the rotation of the valve shaft in the fixed direction. A cushioning member 121 suppressing any hitting noise of the valve body 122 onto the bypass pipe 118 is provided at the downstream end of the bypass pipe 118.

With this constitution, when the flow rate of the exhaust gas flowing through the bypass pipe 118 is equal to or lower than the predetermined value, the valve body 122 is urged by the urging spring 125 to close the downstream end of the bypass pipe 118. When the flow rate of the exhaust gas is equal to or higher than the predetermined value, the valve body 122 is opened against the urging force of the urging spring 125.

As shown in Fig. 5, the element cover 108 provided with a thermoelement 107 as the above-described temperature-activated actuator is disposed outside the first case 103. The medium circulating through the cooling portion of the internal combustion engine flows into the element cover 108 through the medium inlet 116.

The thermoelement 107 is arranged in such a manner that its heat receiving portion contacts the medium flowing through the element cover 108, and corresponding to the temperature of the medium, the thermoelement 107 causes the activating arm 112 to perform a translatory expanding motion in the β direction in Fig. 5, according to the heat expansion of the incorporated paraffin wax when the temperature is high, and allows the activating arm 112 to perform a translatory contracting motion in the opposite direction to the above-mentioned direction by a return spring (not shown) when the temperature is low and the paraffin wax contracts.

A crank 111 is provided integrally with the valve shaft 110 for conjoint movement with the valve body 122, an engaging strip 111a formed on the crank 111 is arranged to face the activating arm 112, and the crank 111 opening and closing the valve body 122 by expanding and contracting the activating arm 112 is provided to be rotated integrally with the valve shaft 110.
The activating arm 112 and the crank 111 are not joined to each other, can contact with each other, and can be spaced from each other, thereby forming the floating mechanism.

The operation of Embodiment 3 will be described.
Figs. 8A to 8C are partially enlarged views showing operational states as seen from the D direction in Fig. 5.

Fig. 8A shows a case where the flow rate of the exhaust gas and the temperature of the medium are both equal to or lower than the predetermined value. In this case, the valve body 122 closes the bypass pipe 118 according to the urging force of the urging spring 125. The thermoelement 107 is also in the contracted state, and the activating arm 112 is spaced from the engaging strip 111a of the crank 111.

Fig. 8B shows a case where the flow rate of the exhaust gas is equal to or higher than the predetermined value and the temperature of the medium is equal to or lower than the predetermined value.
In this case, the thermoelement 107 is in the contracted state, but the flow of the exhaust gas pushes the valve body 122 to open the bypass pipe 118 against the urging force of the urging spring 125. At this time, since the crank 111 rotated integrally with the valve body 122 is provided so that it can be spaced from the activating arm 112, the valve body 122 is rotated in the opening direction to open the bypass pipe 18 even if the thermoelement 107 does not operates and the activating arm 112 does not expand.

Fig. 8C shows a case where the temperature of the medium is equal to or higher than the predetermined value and the flow rate of the exhaust gas is equal to or lower than the predetermined value.
In this case, the thermoelement 107 expands so that the activating arm 112 is brought into contact with the engaging strip 111a of the crank 111 to push it to thereby rotate the crank 111. Thus, the valve body 122 rotated integrally with the crank 111 is rotated in the opening direction to open the bypass pipe 18.

Embodiment 3 can exhibit the same effect as Embodiment 1.

The embodiments according to the present invention are described above, but the present invention is not limited to the above embodiments, and design changes in the scope without departing from the purport of the present invention are included in the present invention.

For example, the urging member of the valve body may serve as the urging member (return spring) included in the thermoelement.
A bimetal or a shape-memory alloy is used for the temperature-activated actuator. The valve body may be rotated by shape change of these.
A heat exchanger, a valve body, an urging member, a crank mechanism, and a floating mechanism of conventionally known constitution can be optionally employed.
A sound absorbing material may be provided in the bypass route and the heat exchange route to provide a noise suppressing function to the heat recovery device.

The present invention is not limited to a heat recovery device (heat collector, oil warmer, and the like) in a narrow sense mainly for heat recovery of a medium, and includes a heat exchanger (exhaust cooler, EGR cooler, and the like) mainly for cooling exhaust gas as a heat recovery device. The present invention is not limited for being applied to an internal combustion engine of a vehicle and can be applied to exhaust systems of all exhaust gas generators such as a general-purpose engine and a stationary type combustor.

### Brief Description of Drawings

Fig. 1 is a front view showing an exhaust heat recovery device of Embodiment 1 according to the present invention;
Fig. 2 is a vertical section view of the exhaust heat recovery device in Fig. 1;
Fig. 3 is a cross-sectional view taken along line III - III in Fig. 1;
Fig. 4 is a schematic view showing an exhaust heat recovery device of Embodiment 2 according to the present invention;
Fig. 5 is a front view showing an exhaust heat recovery device of Embodiment 3 according to the present invention;
Fig. 6 is a vertical section view of the exhaust heat recovery device taken along line VI - VI in Fig. 5;
Fig. 7 is a cross-sectional view taken along line VII - VII in Fig. 5;
Fig. 8A is a partially enlarged view showing an operated state as seen in the D direction in Fig. 5;
Fig. 8B is a partially enlarged view showing another operated state as seen in the D direction in Fig. 5; and
Fig. 8C is a partially enlarged view showing a further operated state as seen in the D direction in Fig. 5.

## Claims

1. An exhaust heat recovery device provided in an exhaust system of an internal combustion engine and comprising a heat exchanger (32) for performing heat exchange between exhaust gas and a medium, a bypass route (18; 33; 118) through which the exhaust gas bypasses the heat exchanger (32), and a valve body (22; 35; 122) that operates to open said bypass route (18; 33; 118) from a closed state against urging force of an urging member (34; 125) when a flow rate of the exhaust gas is equal to or higher than a predetermined value,
**characterized by**
a temperature-activated actuator (7; 37; 107) that causes said valve body (22; 35; 122) to open when the temperature of said medium is equal to or higher than a predetermined value, whereby said valve body (22; 35; 122) operates to open when at least one of the flow rate of the exhaust gas and the temperature of the medium is equal to or higher than the corresponding predetermined value.

2. The exhaust heat recovery device according to claim 1, further comprising a crank mechanism (11; 39; 111) that causes said valve body (22; 35; 122) to open by an expanding movement of said temperature-activated actuator (7; 37; 107) which expands and contracts according to the temperature of said medium, and a floating mechanism that couples the contracting movement of said temperature-activated actuator (7; 37; 107) and the closing movement of said valve body (22; 35; 122) in an floating state.

3. The exhaust heat recovery device according to claim 1 or 2, wherein said temperature-activated actuator (7; 37; 107) is a thermoelement (7; 37; 107) which expands and contracts by an incorporated wax.

## Patentansprüche

1. Abgaswärmerückgewinnungsvorrichtung, die in einem Abgassystem einer Verbrennungskraftmaschine vorgesehen ist und aufweist: einen Wärmetauscher (32) zum Durchführen eines Wärmetauschs zwischen dem Abgas und einem Medium, eine Überbrückungsstrecke (18; 33; 118), durch die das Abgas den Wärmetauscher (32) überbrückt, und einen Ventilkörper (22; 35; 122), der betrieben wird, um die Überbrückungsstrecke (18; 33; 118) aus einem geschlossenen Zustand gegen eine drängende Kraft eines drängenden Elements (34; 125) zu öffnen, wenn eine Strömungsrate des Abgases gleich oder höher als ein vorbestimmter Wert ist,
**gekennzeichnet durch**,
ein temperaturaktiviertes Stellglied (7; 37; 107), das bewirkt, dass der Ventilkörper (22; 35; 122) öffnet, wenn die Temperatur des Mediums gleich oder höher als ein vorbestimmter Wert ist, wobei der Ventilkörper (22; 35; 122) betrieben wird, um zu öffnen, wenn zumindest entweder die Strömungsrate des Abgases oder die Temperatur des Mediums gleich oder höher als der entsprechende vorbestimmte Wert ist.

2. Abgaswärmerückgewinnungsvorrichtung nach Anspruch 1, ferner mit einem Kurbelmechanismus (11; 39; 111), der bewirkt, dass der Ventilkörper (22; 35; 122) durch eine ausdehnende Bewegung des temperaturaktivierten Stellglieds (7; 37; 107) öffnet, das sich gemäß der Temperatur des Mediums ausdehnt und zusammenzieht, und einem Schwebemechanismus, der die zusammenziehende Bewegung des temperaturaktivierten Stellglieds (7; 37; 107) und die schließende Bewegung des Ventilkörpers (22; 35; 122) in einem Schwebezustand koppelt.

3. Abgaswärmerückgewinnungsvorrichtung nach Anspruch 1 oder 2, wobei das temperaturaktivierte Stellglied (7; 37; 107) ein Thermoelement (7; 37; 107) ist, das sich durch ein enthaltenes Wachs ausdehnt und zusammenzieht.

## Revendications

1. Dispositif de récupération de chaleur d'échappement prévu dans un système d'échappement d'un moteur à combustion interne et comprenant un échangeur de chaleur (32) pour effectuer l'échange de chaleur entre les gaz d'échappement et un milieu, une voie de contournement (18, 33, 118) au moyen de laquelle les gaz d'échappement contournent l'échangeur de chaleur (32), et
un corps de soupape (22; 35; 122) qui fonctionne pour ouvrir ladite voie de contournement (18 ; 33 ; 118) d'un état fermé à l'encontre une force de sollicitation d'un élément de sollicitation (34 ; 125) lorsqu'un débit d'écoulement des gaz d'échappement est supérieur ou égal à une valeur prédéterminée, **caractérisé par**
un actionneur activé par température (7 ; 37 ; 107) qui amène ledit corps de soupape (22 ; 35 ; 122) à s'ouvrir lorsque la température dudit milieu est égale ou supérieure à une valeur prédéterminée, moyennant quoi ledit corps de soupape (22 ; 35 ; 122) fonctionne pour s'ouvrir lorsqu'au moins l'un du débit d'écoulement des gaz d'échappement et de la température du milieu est supérieur ou égal à la valeur prédéterminée correspondante.

2. Dispositif de récupération de chaleur d'échappement selon la revendication 1, comprenant en outre un mécanisme à manivelle (11 ; 39 ; 111) qui amène ledit corps de soupape (22, 35, 122) à s'ouvrir par un mouvement d'expansion dudit actionneur activé par température (7 ; 37 ; 107) qui se dilate et se contracte en fonction de la température dudit milieu, et un mécanisme flottant qui relie le mouvement de contraction dudit actionneur activé par température (7 ; 37 ; 107) au mouvement de fermeture de ladite soupape (22 ; 35 ; 122) dans un état flottant.

3. Dispositif de récupération de chaleur d'échappement selon la revendication 1 ou 2, dans lequel ledit actionneur activé par température (7 ; 37 ; 107) est un thermo-élément (7; 37; 107) qui se dilate et se contracte au moyen d'une cire incorporée.
